# FASCICULE DE BREVET EUROPEEN

(11) **EP 1 642 776 B1**
(45) Date de publication et mention de la délivrance du brevet: **12.09.2007**
(21) Numéro de dépôt: 05291585.7
(22) Date de dépôt: 25.07.2005
(51) Int. Cl.: B60R 5/04

(54) **Système de montage d'un cache-bagages comprenant un rail annexe**
Montagesystem einer Gepäckraumabdeckung mit einer Schiene
Mounting system of a luggage cover with a rail

(30) Priorité: 29.09.2004 FR 0452191
(43) Date de publication de la demande: 05.04.2006
(73) Titulaire: Centre d'etude et de recherche pour l'automobile (CERA), 51100 Reims (FR)
(72) Inventeur: Montagne, Frédéric, 51150 Tours sur Marne (FR); Guenament, Nicolas, 51100 Reims (FR)
(74) Mandataire: Sayettat, Julien Christian

(56) Documents cités:
- EP-A- 0 565 220
- DE-A1- 10 161 647
- DE-U1- 20 211 074
- US-B1- 6 402 217
- US-B1- 6 416 103

## Description

L'invention concerne un système de montage d'un cache-bagages de véhicule automobile sur une ébénisterie latérale de coffre selon le préambule de la revendication 1. Un tel système est connu du document EP-A-0 565 220.

Il est connu de réaliser des cache-bagages comprenant un rideau rétractable et un dispositif de rétraction du rideau, de sorte que le rideau soit mobile entre une position rétractée de rangement et une position déployée d'utilisation.

En particulier, le rideau peut présenter une souplesse lui permettant de pouvoir être enroulé par le dispositif de rétraction.

Afin d'assurer de façon fiable le déploiement du rideau, il est connu de prévoir au moins un organe de guidage associé en partie latérale du rideau, ledit organe étant agencé pour pouvoir coopérer avec un rail de guidage prévu à cet effet dans l'ébénisterie latérale de coffre. En particulier, le rail de guidage présente une surface d'appui horizontal sur laquelle organe de guidage peut se déplacer en appui lors de l'actionnement du rideau, ledit rail pouvant par exemple se présenter sous la forme d'une gorge.

L'organe de guidage peut en outre assurer une fonction de blocage du rideau en position déployée, par exemple en se logeant dans un logement prévu à cet effet, le déblocage dudit rideau se faisant selon une manipulation plus ou moins complexe de la part de l'utilisateur, par exemple par une traction arrière suivie d'une traction verticale.

En variante, il peut être prévu l'ajout d'une poignée mobile actionnant un système mécanique permettant le blocage réversible du rideau. De telles réalisations présentent l'inconvénient d'être de réalisation complexe et de générer un surpoids important du cache-bagages.

L'invention a pour but de pallier ces inconvénients en proposant un système de montage permettant un déploiement et un blocage fiable du rideau en position déployée, son déblocage se faisant par un simple pression de l'utilisateur. En outre, le système selon l'invention est de réalisation aisée, de faible coût et de faible poids.

A cet effet, l'invention propose un système de montage d'un cache-bagages de véhicule automobile sur une ébénisterie latérale de coffre, ledit cache-bagages comprenant :
- un rideau rétractable,
- un dispositif de rétraction du rideau qui est associé à un premier bord longitudinal du rideau, de sorte que le rideau soit mobile entre une position rétractée de rangement et une position déployée d'utilisation,
ledit système comprenant :
- un rail de guidage prévu dans l'ébénisterie latérale et disposé dans le prolongement du rideau en position déployée, une première et une deuxième parties extrêmes du rail étant disposées dans le prolongement du deuxième bord longitudinal du rideau lorsqu'il est en position respectivement rétractée et déployée,
- un organe de blocage mobile en translation, selon une direction sensiblement perpendiculaire à celle du rail, associé en partie latérale du deuxième bord longitudinal du rideau et de dimensions permettant son introduction dans le rail, ledit organe de blocage étant appliqué de façon permanente, par un moyen de contrainte élastique, contre le rail lors du mouvement du rideau,
la deuxième partie extrême du rail comprenant :
- un renfoncement longitudinal situé sensiblement dans le prolongement du rail, agencé de sorte à recevoir l'organe de blocage et à permettre un blocage du rideau en position déployée,
caractérisé en ce que la deuxième partie extrême du rail comprend en plus :
- un rail annexe débouchant sur le rail,
- une rampe reliant le renfoncement au rail annexe de sorte à permettre, sous l'action d'une force extérieure exercée perpendiculairement à la direction de translation de l'organe de blocage, le passage de l'organe de blocage depuis le renfoncement vers le rail annexe et son libre coulissement vers le rail pour un retour du rideau en position rétractée.

Les termes « longitudinal », « latéral » et « vertical » s'entendent par rapport au positionnement du rideau en position déployée dans le véhicule, ses bords latéraux correspondant à ceux qui sont en regard des ébénisteries, par opposition à ses bords longitudinaux disposés perpendiculairement à ces derniers.

Le système de montage selon l'invention permet un déploiement fiable du rideau du fait de la présence de l'organe de blocage qui, du fait de son application contre le rail, reste positionné de façon fiable contre celui-ci et assure une fonction complémentaire de guidage du rideau lors de son déploiement.

Le blocage du rideau en position déployée est assuré du simple fait de l'agencement géométrique de la deuxième partie extrême du rail, l'organe de blocage s'introduisant dans le renfoncement longitudinal lorsqu'il est disposé en regard de ce dernier.

Encore du fait de la géométrie particulière de la deuxième partie extrême du rail, prévoyant notamment une rampe permettant le retour de l'organe de blocage dans le rail, la rétraction du rideau se fait selon une manoeuvre particulièrement simple, selon l'application d'une simple force dans une direction donnée, et non par l'application d'une succession de forces multidirectionnelles.

On évite en outre la mise en oeuvre de mécanismes complexes, préjudiciables en termes de coûts et de poids, tels qu'on peut les trouver dans les systèmes à poignée mobile.

Selon une réalisation, le rail annexe est situé sensiblement à l'aplomb vertical du renfoncement, de sorte à permettre le passage de l'organe de blocage depuis le renfoncement vers le rail annexe sous l'action d'une force sensiblement verticale.

Le système peut comprendre en outre un épaulement disposé entre la rampe et le rail annexe, de sorte à empêcher le retour non souhaité de l'organe de blocage depuis le rail annexe vers le renfoncement lors de la manoeuvre de déblocage du rideau pour son retour en position rétractée.

Il peut être prévu que le système comprenne en outre un organe de guidage, associé en partie latérale du rideau et à distance de l'organe de blocage, ledit organe de guidage étant dimensionné de sorte à être introduit et à pouvoir coulisser dans le rail lors du mouvement du rideau.

La présence d'un tel organe permet d'optimiser le guidage du rideau lors de son déploiement.

Dans une réalisation particulière, l'organe de guidage est mobile en translation et est en interaction avec un moyen de contrainte élastique agencé pour le maintenir en appui permanent contre le rail.

On garantit de la sorte son bon positionnement dans le rail, de sorte à assurer de façon optimale sa fonction de guidage.

Le système peut comprendre en outre au moins un logement prévu sur le rail entre sa première et sa deuxième partie extrême, de sorte à permettre le positionnement de l'organe de blocage en position de blocage, et ainsi le blocage du rideau en position intermédiaire entre sa position rétractée et sa position déployée.

Selon une réalisation, et plus particulièrement dans le cas d'un rideau souple, le deuxième bord longitudinal du rideau peut être associé à une bordure de rigidification, l'organe de blocage et/ou de guidage étant associé à la bordure.

Cette bordure peut se présenter sous le forme d'une bavette rigide, dont la géométrie est agencée pour permettre une jonction optimisée entre le cache-bagages déployé et l'ébénisterie arrière de coffre, de sorte à garantir une occultation optimale des bagages.

Il peut être prévu deux organes de blocage et/ou de guidage, situés latéralement respectivement de part et d'autre du rideau. Une telle réalisation permet d'assurer un blocage, et un guidage, optimisés du rideau.

Dans le cas d'un rideau souple, apte être enroulé, le dispositif de rétraction du rideau peut comprendre un carter dans lequel est disposé un dispositif d'enroulement du rideau en position rétractée.

D'autres particularités et avantages de l'invention apparaîtront dans la description qui suit, faite en référence aux figures jointes dans lesquelles :
- la figure 1 est une vue schématique en perspective du système selon une réalisation, dans son environnement véhicule, le rideau étant en position intermédiaire entre sa position rétractée et sa position déployée,
- la figure 2 est une vue schématique partielle en perspective d'un détail du système selon la réalisation représentée en figure 1.

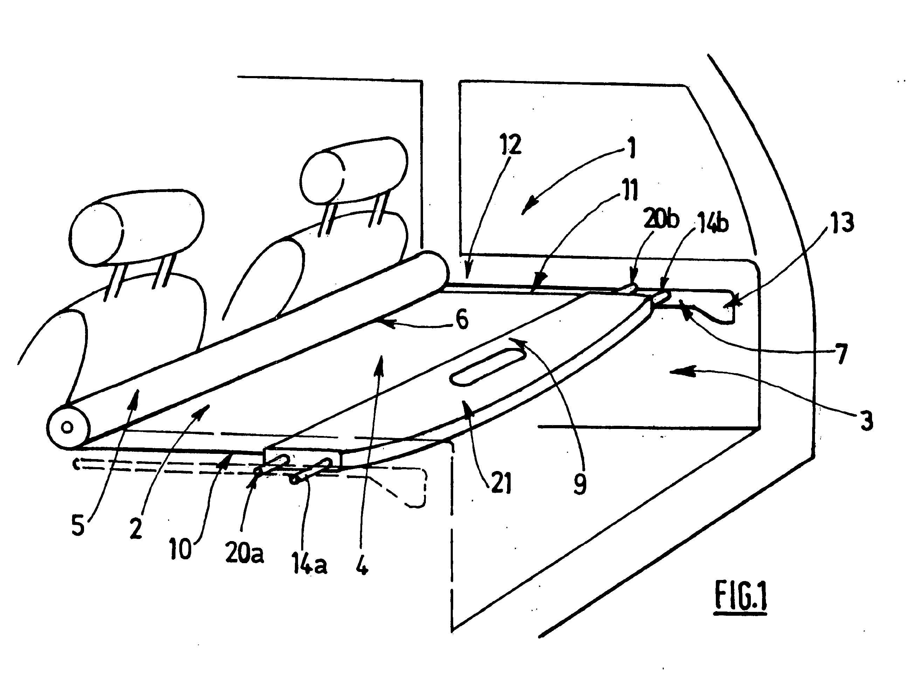

En référence à la figure 1, on décrit à présent un système de montage 1 d'un cache-bagages 2 de véhicule automobile sur une ébénisterie latérale 3 de coffre.

Le cache-bagages 2 comprend un rideau rétractable 4 et un dispositif de rétraction 5 du rideau 4, associé à un premier bord longitudinal 6 du rideau 4.

Le rideau 4 comprend en outre un deuxième 9 bord longitudinal, et deux parties latérales 10 et 11.

Le rideau 4 est représenté en position intermédiaire entre sa position rétractée et sa position déployée.

Selon la réalisation représentée, le dispositif de rétraction 5 du rideau 4, de nature souple, comprend un carter dans lequel est disposé un dispositif d'enroulement du rideau 4 en position rétractée.

Le système 1 comprend un rail 7, sous forme de gorge, prévu dans l'ébénisterie 3 et disposé dans le prolongement du rideau 4 en position déployée.

Une première 12 et une deuxième 13 parties extrêmes du rail 7 sont disposées à proximité du deuxième bord longitudinal 9 du rideau lorsqu'il est en position respectivement rétractée et déployée.

Deux organes de blocage 14a, 14b mobiles en translation sont associés en parties latérales du deuxième bord longitudinal 9 du rideau et sont de dimensions permettant leur introduction dans le rail 7, lesdits organes de blocage étant appliqués de façon permanente, par un moyen de contrainte élastique, non représenté (par exemple un ressort), contre le rail 7 lors du mouvement du rideau 4.

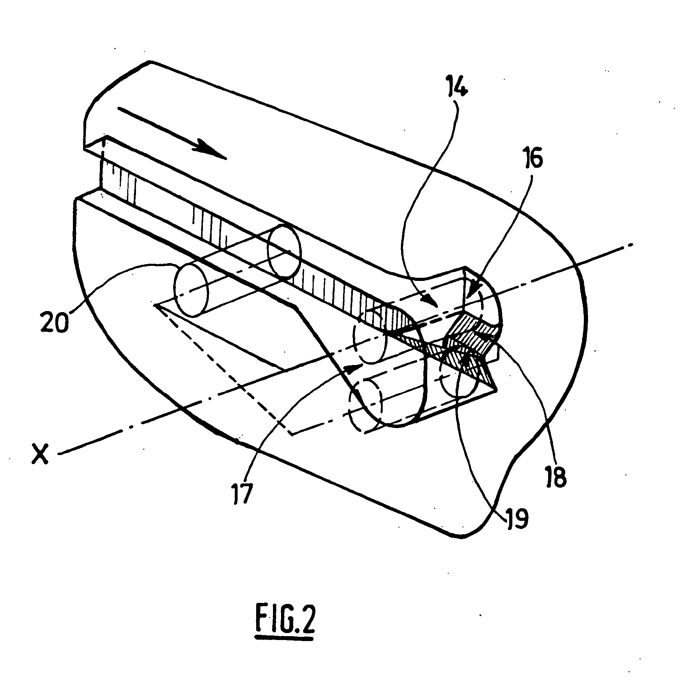

Comme représenté sur la figure 2, représentant un détail de la zone du système 1 voisine de la deuxième partie extrême 13, ladite deuxième partie extrême comprend :
- un renfoncement longitudinal 16 situé sensiblement dans le prolongement du rail 7, agencé de sorte à recevoir l'organe de blocage 14 et à permettre un blocage du rideau 4 en position déployée,
- un rail annexe 17, sous forme de gorge, de niveau similaire à celui du rail 7 et débouchant sur lui,
- une rampe 18 reliant le renfoncement 16 au rail annexe 17 de sorte à permettre, sous l'action d'une force extérieure exercée perpendiculairement à la direction de translation (représentée par l'axe X) de l'organe 14 de blocage, le passage de l'organe de blocage 14 depuis le renfoncement 16 vers le rail annexe 17 et son libre coulissement vers le rail 7 pour un retour du rideau 4 en position rétractée.

Dans la réalisation représentée, le rail annexe 17 est situé sensiblement à l'aplomb vertical du renfoncement 16, de sorte à permettre le passage de l'organe de blocage depuis le renfoncement 16 vers le rail annexe 17 sous l'action d'une force verticale exercée par l'utilisateur, soit sensiblement perpendiculairement à l'axe X, ce qui correspond à une cinématique de déblocage très simple.

Afin d'empêcher le retour non souhaité de l'organe de blocage 14a,14b depuis le rail annexe 17 vers le renfoncement 16 lors de la manoeuvre de déblocage du rideau 4 pour son retour en position rétractée, il est prévu un épaulement 19 disposé entre la rampe 18 et le rail annexe 17.

La rampe 18 peut être formée d'un plan incliné.

Deux organes de guidage 20a,20b sont associés en parties latérales 10,11 du rideau et à distance des organes de blocage 14a,14b, lesdits organes de guidage étant dimensionnés de sorte à être introduits et à pouvoir coulisser dans le rail 7 lors du mouvement du rideau **4.**

Selon une réalisation, les organes de guidage 20a,20b sont mobiles en translation, parallèlement à l'axe X, et sont en interaction avec un moyen de contrainte élastique agencé pour les maintenir en appui permanent contre le rail 7.

Selon une réalisation non représentée, le système comprend en outre un logement ou un épaulement, prévu sur chaque rail 7 entre sa première 12 et sa deuxième 13 partie extrême, de sorte à permettre le positionnement des organes de blocage 14a,14b en position de blocage et le blocage du rideau 4 en position intermédiaire entre sa position rétractée et sa position déployée.

Selon la réalisation représentée, le deuxième bord longitudinal 9 du rideau est associé à une bordure de rigidification 21, représentée en figure 1, les organes de blocage 14a,14b et/ou de guidage 20a,20b étant associés à la bordure 21. La manoeuvre de déploiement, blocage et déblocage du rideau est alors effectuée par actionnement de la bordure 21.

## Revendications

1. Système de montage (1) d'un cache-bagages (2) de véhicule automobile sur une ébénisterie latérale (3) de coffre, ledit cache-bagages comprenant :
• un rideau rétractable (4),
• un dispositif de rétraction (5) du rideau (4) qui est associé à un premier bord longitudinal (6) du rideau (4), de sorte que le rideau (4) soit mobile entre une position rétractée de rangement et une position déployée d'utilisation,
ledit système comprenant :
• un rail (7) prévu dans l'ébénisterie latérale (3) et disposé dans le prolongement du rideau (4) en position déployée, une première (12) et une deuxième (13) parties extrêmes du rail (7) étant disposées dans le prolongement du deuxième bord longitudinal (9) du rideau (4) lorsqu'il est en position respectivement rétractée et déployée,
• un organe de blocage (14a,14b) mobile en translation, selon une direction sensiblement perpendiculaire à celle du rail (7), associé en partie latérale (10,11) du deuxième bord longitudinal (9) du rideau (4) et de dimensions permettant son introduction dans le rail (7), ledit organe de blocage étant appliqué de façon permanente, par un moyen de contrainte élastique, contre le rail (7) lors du mouvement du rideau (4),
la deuxième partie extrême du rail (7) comprenant:
• un renfoncement longitudinal (16) situé sensiblement dans le prolongement du rail (7), agencé de sorte à recevoir l'organe de blocage (14a,14b) et à permettre un blocage du rideau (4) en position déployée,
**caractérisé en ce que** la deuxième partie extrême du rail (7) comprend en plus :
• un rail annexe (17) débouchant sur le rail (7),
• une rampe (18) reliant le renfoncement (16) au rail annexe (17) de sorte à permettre, sous l'action d'une force extérieure exercée perpendiculairement à la direction de translation de l'organe de blocage (14a,14b), le passage dudit organe de blocage depuis le renfoncement (16) vers le rail annexe (17) et son libre coulissement vers le rail (7) pour un retour du rideau (4) en position rétractée.

2. Système selon la revendication 1, **caractérisé en ce que** le rail annexe (17) est située sensiblement à l'aplomb vertical du renfoncement (16), de sorte à permettre le passage de l'organe de blocage (14a,14b) depuis ledit renfoncement vers ledit rail annexe sous l'action d'une force sensiblement verticale.

3. Système selon l'une des revendications 1 ou 2, **caractérisé en ce qu**'il comprend en outre un épaulement (19) disposé entre la rampe (18) et le rail annexe (17), de sorte à empêcher le retour non souhaité de l'organe de blocage (14a,14b) depuis ledit rail annexe vers le renfoncement (16) lors de la manoeuvre de déblocage du rideau (4) pour son retour en position rétractée.

4. Système selon l'une quelconque des revendications 1 à 3, **caractérisé en ce qu'**il comprend en outre un organe de guidage (20a,20b), associé en partie latérale (10,11) du rideau (4) et à distance de l'organe de blocage (14a,14b), ledit organe de guidage étant dimensionné de sorte à être introduit et à pouvoir coulisser dans le rail (7) lors du mouvement dudit rideau.

5. Système selon la revendication 4, **caractérisé en ce que** l'organe de guidage (20a,20b) est mobile en translation, selon une direction sensiblement perpendiculaire à celle du rail (7), ledit organe de guidage étant en interaction avec un moyen de contrainte élastique agencé pour le maintenir en appui permanent contre le rail (7).

6. Système selon l'une quelconque des revendications 1 à 5, **caractérisé en ce qu**'il comprend en outre un logement prévu sur le rail (7) entre sa première (12) et sa deuxième (13) partie extrême, de sorte à permettre le positionnement de l'organe de blocage (14a,14b) en position de blocage, et ainsi le blocage du rideau (4) en position intermédiaire entre sa position rétractée et sa position déployée.

7. Système selon l'une quelconque des revendications 1 à 6, **caractérisé en ce que** le deuxième bord longitudinal (9) du rideau (4) est associé à une bordure de rigidification (21), l'organe de blocage (14a,14b) et/ou de guidage (20a,20b) étant associé à ladite bordure.

8. Système selon l'une quelconque des revendications 1 à 7,**caractérisé en ce qu**'il comprend deux organes de blocage (14a,14b) et/ou de guidage (20a,20b), situés longitudinalement respectivement de part et d'autre du rideau (4).

9. Système selon l'une quelconque des revendications 1 à 8, **caractérisé en ce que** le dispositif de rétraction (5) du rideau (4) comprend un carter dans lequel est disposé un dispositif d'enroulement dudit rideau en position rétractée.

## Claims

1. System for mounting (1) a motor vehicle luggage cover (2) on a boot side panel (3), said luggage cover including :
• a retractable curtain (4),
• a device for retracting (5) the curtain (4),
• which is associated with a first longitudinal edge (6) of the curtain (4), whereby the curtain (4) is movable between a retracted storage position and a deployed operating position,
said system including :
• a rail (7) provided in the side panel (3) and arranged in line with the curtain (4) in deployed position, first (12) and second (13) end portions of the rail (7) being arranged in line with the second longitudinal edge (9) of the curtain (4), when it is in the retracted and deployed position, respectively,
• a locking member (14a, 14b) movable in translation, in a direction substantially perpendicular to that of the rail (7), associated at its side portion (10, 11) with the second longitudinal edge (9) of the curtain (4) and having dimensions enabling it to be inserted into the rail (7), said locking member being applied against the rail (7) continuously by an elastic stressing means, during movement of the curtain (4),
the second end portion of the rail (7) including :
• a longitudinal recess (16) situated substantially in line with the rail (7), designed so as to receive the locking member (14a, 14b) and to enable locking of the curtain (4) in the deployed position,
**characterised in that** the second end portion of the rail (7) further includes:
• an auxiliary rail (17) opening out onto the rail (7),
• a ramp (18) connecting the recess (16) to the auxiliary rail (17) whereby, under the influence of an external force exerted perpendicularly to the direction of translation of the locking member (14a, 14b), it enables said locking member to pass from the recess (16) to the auxiliary rail (17) and to slide freely towards the rail (7) in order for the curtain (4) to return to the retracted position.

2. System of claim 1, **characterised in that** the auxiliary rail (17) is situated substantially in vertical alignment with the recess (16), so as to enable the locking member (14a, 14b) to pass from said recess to said auxiliary rail under the influence of a substantially vertical force.

3. System as claimed in one of claims 1 or 2, **characterised in that** it further includes a shoulder (19) arranged between the ramp (18) and the auxiliary rail (17), so as to prevent the unwanted return of the locking member (14a, 14b) from said auxiliary rail to the recess (16) during the operation of unlocking the curtain (4) in order for it to return to the retracted position.

4. System as claimed in any of claims 1 to 3, **characterised in that** it further includes a guide member (20a, 20b), which is associated with the lateral portion (10, 11) of the curtain (4) and at a distance from the locking member (14a, 14b), said guide member being dimensioned so as to be inserted into and to be capable of sliding inside the rail (7) during the movement of said curtain.

5. System of claim 4, **characterised in that** the guide member (20a, 20b) is movable in translation, in a direction substantially perpendicular to that of the rail (7), said guide member interacting with an elastic stressing means designed to make it bear against the rail (7) continuously.

6. System as claimed in any of claims 1 to 5, **characterised in that** it further includes a seating provided on the rail (7) between the first (12) and the second (13) end portions thereof, so as to enable positioning of the locking member (14a, 14b) in the locked position, and thus locking of the curtain (4) in an intermediate position between its retracted position and its deployed position.

7. System as claimed in any one of claims 1 to 6, **characterised in that** the second longitudinal edge (9) of the curtain (4) is associated with a rigidifying edging (21), the locking (14a, 14b) and/or guide (20a, 20b) member being associated with said edging.

8. System as claimed in any of claims 1 to 7, **characterised in that** it includes two locking (14a, 14b) and/or guide (20a, 20b) members situated lengthwise on both sides of the curtain (4), respectively.

9. System as claimed in any of claims 1 to 8, **characterised in** the device for retracting (5) the curtain (4) includes a housing in which a device is arranged for winding up said curtain into the retracted position.

## Patentansprüche

1. Montagesystem (1) einer Kofferraumabdeckung (2) eines Kraftfahrzeugs auf einem seitlichen Gehäuse (3) des Kofferraums, wobei die besagte Kofferraumabdeckung Folgendes umfasst:
• ein einziehbares Rollo (4),
• eine Einziehvorrichtung (5) für das Rollo (4), die mit einem ersten Längsrand (6) des Rollos (4) verbunden ist, so dass das Rollo (4) zwischen einer eingezogenen Verstauposition und einer ausgefahrenen Verwendungsposition beweglich ist,
wobei das besagte System Folgendes umfasst:
• eine Schiene (7), die im seitlichen Gehäuse (3) vorgesehen und in der Verlängerung des Rollos (4) in ausgefahrener Position angeordnet ist, wobei ein erster (12) und ein zweiter (13) Endteil der Schiene (7) in der Verlängerung des zweiten Längsrandes (9) des Rollos (4) angeordnet sind, wenn dieses sich jeweils in eingezogener und in ausgefahrener Position befindet,
• ein Blockierelement (14a, 14b), das gemäß einer Richtung, die im Wesentlichen senkrecht zu jener der Schiene (7) verläuft, verschiebbar und auf dem seitlichen Teil (10, 11) des zweiten Längsrandes (9) des Rollos (4) befestigt ist, mit Abmessungen, die seine Einführung in die Schiene (7) ermöglichen, wobei das besagte Blockierelement bei der Bewegung des Rollos (4) durch ein elastisches Spannmittel permanent gegen die Schiene (7) gedrückt wird,
wobei der zweite Endteil der Schiene (7) Folgendes umfasst:
• eine Längsverstärkung (16), die sich im Wesentlichen in der Verlängerung der Schiene (7) befindet und so eingerichtet ist, dass sie das Blockierelement (14a, 14b) aufnehmen und eine Blockierung des Rollos (4) in ausgefahrener Position ermöglichen kann, **dadurch gekennzeichnet, dass** der zweite Endteil der Schiene (7) des Weiteren Folgendes umfasst:
• eine Nebenschiene (17), die in die Schiene (7) mündet,
• eine Rampe (18), die die Verstärkung (16) mit der Nebenschiene (17) verbindet, so dass unter Einwirkung einer äußeren Kraft, die senkrecht zur Verschiebungsrichtung des Blockierelements (14a, 14b) ausgeübt wird, der Übergang des besagten Blockierelements aus der Verstärkung (16) in die Nebenschiene (17) und sein freies Gleiten in der Schiene für die Rückkehr des Rollos (4) in die eingezogene Position ermöglicht werden.

2. System nach Anspruch 1, **dadurch gekennzeichnet, dass** sich die Nebenschiene (17) im Wesentlichen senkrecht im Lot der Verstärkung (16) befindet, so dass der Übergang des Blockierelements (14a, 14b) aus der besagten Verstärkung in die besagte Nebenschiene unter Einwirkung einer im Wesentlichen senkrechten Kraft ermöglicht wird.

3. System nach einem der Ansprüche 1 oder 2, **dadurch gekennzeichnet, dass** es zusätzlich einen Absatz (19) umfasst, der zwischen der Rampe (18) und der Nebenschiene (17) angeordnet ist, so dass die unerwünschte Rückkehr des Blockierelements (14a, 14b) von der besagten Nebenschiene in die Verstärkung (16) beim Vorgang des Lösens des Rollos (4) zur Rückkehr in seine eingezogene Position verhindert wird.

4. System nach einem der Ansprüche 1 bis 3, **dadurch gekennzeichnet, dass** es zusätzlich ein Führungselement (20a, 20b) umfasst, das auf dem seitlichen Teil (10, 11) des Rollos (4) und vom Blockierelement (14a, 14b) beabstandet befestigt ist, wobei das besagte Führungselement so dimensioniert ist, dass es in die Schiene (7) eingeführt und bei der Bewegung des besagten Rollos in dieser gleiten kann.

5. System nach Anspruch 4, **dadurch gekennzeichnet, dass** das Führungselement (20a, 20b) gemäß einer Richtung, die im Wesentlichen senkrecht zu jener der Schiene (7) verläuft, verschiebbar ist, wobei das besagte Führungselement mit einem elastischen Spannmittel interagiert, das eingerichtet ist, um es permanent gegen die Schiene (7) gedrückt zu halten.

6. System nach einem der Ansprüche 1 bis 5, **dadurch gekennzeichnet, dass** es zusätzlich eine Aufnahme umfasst, die in der Schiene (7) zwischen ihrem ersten (12) und ihrem zweiten (13) Endteil vorgesehen ist, so dass die Positionierung des Blockierelements (14a, 14b) in Blockierposition, und somit die Blockierung des Rollos (4) in einer Zwischenposition zwischen seiner eingezogenen Position und seiner ausgefahrenen Position, ermöglicht werden.

7. System nach einem der Ansprüche 1 bis 6, **dadurch gekennzeichnet, dass** der zweite Längsrand (9) des Rollos (4) mit einer Versteifungskante (21) verbunden ist, wobei das Blockier- (14a, 14b) und/oder das Führungselement (20a, 20b) mit der besagten Kante verbunden sind.

8. System nach einem der Ansprüche 1 bis 7, **dadurch gekennzeichnet, dass** es zwei Blockier- (14a, 14b) und/oder Führungselemente (20a, 20b) umfasst, die sich jeweils längsseits auf beiden Seiten des Rollos (4) befinden.

9. System nach einem der Ansprüche 1 bis 8, **dadurch gekennzeichnet, dass** die Einziehvorrichtung (5) des Rollos (4) ein Gehäuse umfasst, in dem eine Aufrollvorrichtung für das besagte Rollo in eingezogener Position angeordnet ist.
